# FASCICULE DE BREVET EUROPEEN

(11) **EP 2 886 459 B1**
(45) Date de publication et mention de la délivrance du brevet: **27.04.2016**
(21) Numéro de dépôt: 14004003.1
(22) Date de dépôt: 27.11.2014
(51) Int. Cl.: B64C 27/605, B64C 27/82, B64C 27/78

(54) **Giravion équipé d'un rotor arrière anti-couple participant sélectivement à la sustentation et à la propulsion en translation du giravion**
Drehflügelflugzeug, das mit einer Heckrotorkonfiguration ausgestattet ist, die selektiv an der Auftriebs- und Translationsbewegung des Drehflügelflugzeugs beteiligt ist
Rotorcraft with an anti-torque rear rotor participating selectively in the lift and translation propulsion of the rotorcraft

(30) Priorité: 17.12.2013 FR 1302966
(43) Date de publication de la demande: 24.06.2015
(73) Titulaire: Airbus Helicopters, 13725 Marignane Cedex (FR)
(72) Inventeur: Prud'Homme-Lacroix, Pierre, 13127 Vitrolles (FR); Bistuer, Olivier, 13580 La Fare Les Oliviers (FR)
(74) Mandataire: GPI & Associés

(56) Documents cités:
- FR-A- 1 484 732
- FR-A1- 2 969 577
- GB-A- 622 837
- GB-A- 2 274 634
- US-A1- 2011 211 953

## Description

La présente invention est du domaine des giravions et relève plus spécifiquement des rotors anticouple à axe d'entrainement en rotation sensiblement horizontal équipant les giravions. Un tel rotor anticouple procure typiquement une stabilisation et un guidage en lacet du giravion, en contrant un couple en lacet généré par un rotor principal à axe d'entrainement en rotation sensiblement vertical fournissant au moins la sustentation du giravion.

Le rotor anticouple relevant de la présente invention est plus spécifiquement installé à l'extrémité d'une poutre de queue du giravion. Le disque rotor formé par la voilure tournante dudit rotor anticouple est principalement orienté verticalement et longitudinalement en étant disposé latéralement à la poutre de queue du giravion, de sorte que le rotor anticouple génère une composante vectorielle transversale de poussée procurant en vol le contrôle en lacet du giravion.

Les notions de « latéral » ou autrement dit « disposé de côté », de « transversal » et de « vertical » sont des notions relatives communément identifiées dans le domaine des giravions par rapport à la notion de « longitudinal » définie selon l'extension générale du giravion au sol typiquement considérée longitudinalement d'avant en arrière.

Dans leur généralité, les rotors de giravion comprennent typiquement une voilure tournante composée de pales radialement réparties autour d'un moyeu. Le moyeu est entraîné en rotation par l'intermédiaire d'une chaîne de transmission de puissance mécanique en prise avec un groupe de motorisation équipant le giravion. La voilure tournante mue en rotation définit classiquement un disque rotor délimité entre les extrémités des pales entraînées en rotation par le moyeu.

Concernant les rotors, il est typiquement fait distinction entre l'axe d'entraînement en rotation du rotor et l'axe de rotation géométrique du rotor. En effet, l'axe d'entraînement en rotation du rotor est notamment identifié par l'axe de rotation du moyeu porteur de la voilure tournante, tandis que l'axe de rotation du rotor correspond à l'axe géométrique de rotation du disque rotor formé par la voilure tournante du rotor.

Les pales sont individuellement montées sur le moyeu par l'intermédiaire de pieds de pale respectifs. Les pieds de pale peuvent être intégrés aux pales ou être formés de bras de montage sur lesquels sont rapportées les pales. Un tel bras de montage est par exemple agencé en manchon.

Les pales d'un rotor de giravion sont manoeuvrables en pivotement sur elles-mêmes par un pilote du giravion, autour d'un axe de variation de pas orienté suivant la direction générale d'extension des pales. Le pivotement des pales autour de leur axe de variation de pas est provoqué par l'intermédiaire d'un mécanisme de manoeuvre des pales actionnable par une chaîne cinématique mise en oeuvre par le pilote générant des commandes de vol. Ledit pilote peut être un pilote humain ou un pilote automatique.

Pour provoquer le pivotement des pales autour de leur axe de variation de pas, les pieds de pale sont individuellement montés en pivotement sur le moyeu au moins autour de l'axe de variation de pas des pales. Les pieds de pale sont chacun équipés d'un levier de pas pour leur mise en prise individuelle avec ledit mécanisme de manoeuvre par l'intermédiaire d'une bielle de manoeuvre qui leur est affectée.

Ces dispositions sont telles que le pilote peut faire varier l'incidence des pales des différents rotors équipant le giravion pour modifier la propulsion et/ou l'attitude en vol du giravion suivant ses différentes directions d'extension comprenant la direction d'extension longitudinale, la direction d'extension transversale et/ou la direction d'extension verticale.

Classiquement, les giravions sont équipés d'au moins un rotor principal à axe d'entrainement en rotation sensiblement vertical procurant au moins leur sustentation et/ou leur guidage suivant la direction verticale d'extension du giravion.

Dans le cas spécifique des hélicoptères, le rotor principal procure non seulement la sustentation du giravion, mais aussi sa propulsion suivant de quelconques directions de progression et le changement d'attitude du giravion en tangage et en roulis.

A cet effet, les pales du rotor principal sont manoeuvrables par le pilote en pivotement autour de leur axe de variation de pas. Pour modifier la portance procurée par le rotor principal, le pilote génère des commandes de vol faisant varier collectivement le pas des pales du rotor principal. Pour modifier l'attitude du giravion en tangage et/ou en roulis, le pilote génère des commandes de vol faisant varier cycliquement le pas des pales du rotor principal.

Concernant le rotor principal, ledit mécanisme de manoeuvre des pales autour de leur axe de variation de pas comprend fréquemment un plateau oscillant monté sur un mât porteur du rotor principal suivant son axe d'entrainement. Le plateau oscillant est composé d'un plateau inférieur porteur en superposition coaxiale d'un plateau supérieur. Le plateau inférieur est monté fixe en rotation autour de l'axe d'entrainement du rotor principal. Le plateau supérieur est monté tournant autour de l'axe d'entrainement du rotor principal, en étant placé en prise avec le moyeu par l'intermédiaire d'une structure articulée, telle qu'agencée en compas par exemple.

Par ailleurs, le plateau inférieur est monté mobile sur le mât en translation et en nutation. Le plateau inférieur est manoeuvrable par le pilote par des bielles de commande selon trois lignes de commande de vol distinctes. Le plateau supérieur est relié à chacun des pieds de pale par des bielles de manoeuvre en prises respectives avec les leviers de pas dont les pieds de pale sont chacun équipés. Un tel agencement du plateau oscillant lui confère une mobilité axiale tout en étant oscillant dans tous les sens en rotule, pour provoquer la variation du pas des pales selon les commandes de vol opérées par le pilote.

Il ressort de ces dispositions que le plateau oscillant peut être placé par le pilote suivant une quelconque orientation dans l'espace par rapport au mât. Un déplacement en translation du plateau oscillant le long du mat provoque une variation collective du pas des pales permettant de modifier la sustentation procurée par le rotor principal et permettant de faire varier l'attitude en vol du giravion selon sa direction verticale d'extension. Un basculement du plateau oscillant par rapport au mât selon la position individuelle des pales en azimut, provoque une variation cyclique du pas des pales permettant de modifier l'attitude en vol du giravion en tangage et/ou en roulis.

Il a aussi été proposé par le document US 2011/211953 (STILLE BRANDON) un mécanisme analogue à double plateau pour faire varier le pas des pales d'un rotor de giravion. Selon ce document, un plateau extérieur placé en prise sur les pales est disposé autour d'un plateau intérieur monté oscillant dans son plan général. Les plateaux sont manoeuvrables conjointement en translation par une tige principale pour faire varier collectivement le pas des pales. Une tige secondaire coaxiale à la tige principale permet d'incliner le plateau intérieur et par suite le plateau extérieur par rapport à l'axe du rotor pour faire varier cycliquement le pas des pales.

Par ailleurs, les giravions sont classiquement équipés d'un dispositif anticouple procurant une stabilisation du giravion en lacet en contrant le couple en lacet généré par le rotor principal. Un tel dispositif anticouple est par ailleurs exploité pour guider le giravion en lacet. Les dispositifs anticouple équipant les giravions sont fréquemment installés à l'extrémité d'une poutre de queue du giravion. Un dispositif anticouple pour giravion est par exemple du type à propulsion d'air ou plus communément est formé d'un rotor arrière à axe d'entrainement en rotation sensiblement horizontal.

Concernant un tel rotor arrière, le disque rotor formé par la voilure du rotor arrière est principalement orienté verticalement et longitudinalement en étant notamment disposé latéralement à la poutre de queue du giravion. Ces dispositions sont telles que le rotor arrière génère une poussée comportant principalement une composante vectorielle transversale pour procurer le contrôle en lacet du giravion.

La stabilisation et le guidage en lacet du giravion sont régulés par une variation collective du pas des pales du rotor arrière, provoquant une variation de l'amplitude de la poussée générée par le rotor arrière. A cet effet, le rotor arrière est équipé d'un dit mécanisme de manoeuvre de ses pales autour de leur axe de variation de pas.

Selon une forme classique de réalisation, un tel mécanisme de manoeuvre équipant un rotor arrière comprend une tige de commande montée mobile en translation sur un châssis de montage du rotor arrière sur la poutre de queue. Un tel châssis est notamment formé d'une boîte de transmission de puissance mécanique à renvoi d'angle reliant le rotor arrière à un arbre moteur orienté orthogonalement par rapport à l'axe d'entrainement du rotor arrière.

La tige de commande s'étend à l'intérieur du moyeu en étant montée fixe en rotation. La tige de commande est manoeuvrable en translation par l'intermédiaire d'une bielle de commande mise en oeuvre par le pilote selon une ligne de commande affectée au contrôle de l'attitude en lacet du giravion.

Un plateau de commande est monté tournant sur la tige de commande et est porteur de bielles de manoeuvre placées en prises respectives avec les leviers équipant individuellement les pieds de pale porteurs des pales du rotor arrière. Ces dispositions sont telles qu'une manoeuvre en translation de la tige de commande par le pilote provoque une variation collective du pas des pales du rotor arrière.

Par ailleurs, les efforts pour mouvoir en pivotement les pales des différents rotors équipant le giravion pouvant être importants, il peut être utile d'assister le pilote dans les efforts à fournir pour manoeuvrer les pales. A cet effet, il est courant d'exploiter des servocommandes placées sur les différentes lignes de commande pour faire varier le pas des pales des différents rotors.

Plus particulièrement, les servocommandes peuvent assister un pilote humain vis-à-vis des efforts qu'il doit fournir pour faire varier le pas des pales par l'intermédiaire d'une chaîne mécanique de transmission de puissance. Les servocommandes peuvent encore être avantageusement pilotées en fonction de commandes de vol générées par un pilote automatique.

Dans ce contexte, il est apparu que l'exploitation du rotor arrière pouvait être optimisée en utilisant la poussée fournie par le rotor arrière non seulement pour stabiliser et guider le giravion en lacet, mais aussi pour participer à sa propulsion en translation. Plus particulièrement, le rotor arrière peut être exploité non seulement pour contrôler l'attitude en lacet du giravion, mais aussi pour former une hélice propulsive du giravion en translation.

Cependant pour former une telle hélice propulsive en translation, le disque rotor formé par la voilure du rotor arrière doit être principalement orienté verticalement en étant incliné par rapport à l'orientation du plan transversal d'extension du giravion.

Une solution connue consiste à monter basculant le rotor arrière sur la poutre de queue, de sorte que le disque rotor puisse être diversement orienté selon l'exploitation qui est faite du rotor arrière.

Plus particulièrement le rotor arrière peut être orienté entre une position d'orientation longitudinale-verticale du disque rotor et une position d'orientation transversale-verticale du disque rotor.

En position d'orientation longitudinale-verticale, le disque rotor est orienté verticalement et longitudinalement suivant les directions d'extension verticale et longitudinale du giravion. Autrement dit en position d'orientation longitudinale-verticale, le disque rotor est disposé sensiblement perpendiculairement à la direction transversale d'extension du giravion.

En position d'orientation transversale-verticale, le disque rotor est orienté verticalement en étant au moins incliné voire en étant disposé perpendiculairement par rapport à la direction d'extension longitudinale du giravion.

Ces dispositions sont telles qu'en position d'orientation longitudinale-verticale du disque rotor, le rotor arrière est seulement exploité pour guider et stabiliser le giravion en lacet à l'encontre du couple en lacet généré par le rotor principal. Une manoeuvre en basculement du rotor arrière disposant le disque rotor en position d'orientation transversale-verticale permet alors une exploitation de la poussée produite par le rotor arrière pour participer à la propulsion du giravion en translation.

On pourra à ce propos se reporter au document FR2969577 (EUROCOPTER), qui divulgue de telles modalités de basculement d'un rotor arrière orientant sélectivement le disque rotor entre une orientation longitudinale-verticale et une orientation transversale-verticale de part et d'autre d'une orientation neutre.

Une autre solution connue consiste à orienter en permanence le disque rotor formé par la voilure du rotor arrière en position longitudinale-verticale en étant plus spécifiquement orienté orthogonalement à la direction d'extension longitudinale du giravion, puis à faire varier collectivement et/ou cycliquement le pas des pales selon les besoins. On pourra à ce propos se reporter au document GB 622 837 (FIRESTONE TIRE & RUBBER CO) ou au document FR1484732 (DORNIER WERKE Gmbh) qui divulgue de telles modalités d'exploitation d'un rotor arrière.

Selon le document FR1484732, la variation du pas des pales est provoquée par la manoeuvre d'un disque oscillant à la manière du plateau oscillant classiquement utilisé pour faire varier le pas des pales d'un rotor principal. Une variation collective du pas des pales permet de réguler l'amplitude de la poussée produite par le rotor arrière et finalement permet de réguler la propulsion du giravion en translation par le rotor arrière. La stabilisation et le guidage en lacet du giravion sont obtenus par une variation cyclique du pas des pales du rotor arrière en association avec la mise en oeuvre d'un gouvernail.

Selon le document GB 622 837, un mécanisme à double plateau est monté sur une douille entourant l'axe de rotation d'un rotor arrière. Le mécanisme à double plateau comprend un plateau extérieur tournant placé autour d'un plateau intérieur fixe en rotation. Le plateau extérieur est en prise sur les pales par l'intermédiaire d'un jeu de tringles pour leur manoeuvre en variation de pas à partir d'un déplacement axial du plateau extérieur. Le plateau intérieur est monté oscillant de sorte que son inclinaison et par suite l'inclinaison du plateau extérieur procure une variation cyclique du pas des pales.

Un autre problème posé par les rotors de giravion réside dans un mouvement de battement des pales dans le plan général du disque rotor formé par la voilure.

Concernant un rotor arrière, on pourra se reporter à ce propos au document GB2274634 (WESTLAND HELICOPTERS), qui propose de contrer un tel mouvement de battement des pales d'un rotor arrière en provoquant une variation cyclique de leur pas.

A cet effet selon GB2274634, une tige de commande est munie d'un plateau de manoeuvre des pales en pivotement autour de leur axe de variation de pas. La tige de commande est montée conjointement tournante avec la voilure sur un châssis de montage du rotor arrière à l'extrémité d'une poutre de queue du giravion, en étant mobile en translation suivant l'axe d'entrainement du rotor arrière. En outre, la tige de commande est articulée en rotule et est manoeuvrable en nutation par un actionneur pour provoquer une inclinaison du plateau de commande et ainsi faire varier cycliquement le pas des pales à chaque tour de rotation du rotor arrière.

Une autre exploitation connue d'un rotor arrière de giravion consiste à assister le rotor principal pour procurer sa sustentation. A cet effet, un rotor arrière est monté à l'extrémité de la poutre de queue d'un giravion de sorte que le disque rotor formé par sa voilure est disposé suivant une orientation longitudinale-penchée. Une telle orientation longitudinale-penchée est conférée au disque rotor par un montage du rotor arrière sur le giravion en disposant son axe d'entrainement de manière significativement inclinée par rapport au plan horizontal d'extension du giravion.

En position d'orientation longitudinale-penchée du disque rotor, le rotor arrière procure non seulement principalement une stabilisation et un guidage en lacet du giravion par une composante vectorielle transversale de poussée, mais aussi un apport complémentaire de sustentation par une composante vectorielle verticale de poussée permettant d'augmenter la plage de centrage arrière du giravion. L'apport complémentaire de sustentation procuré par le rotor arrière est avantageux pour des cas de vol spécifiques, tels qu'en cas de transport de charges lourdes et/ou lorsque le giravion évolue en vol stationnaire ou à basses vitesses communément identifiées inférieures à 50 kt (50 noeuds).

Il est cependant apparu à l'usage qu'un tel apport complémentaire de sustentation pouvait être néfaste sous certaines conditions de vol du giravion, telles que notamment en phase de vol du giravion à des vitesses supérieures à 75 kt (75 noeuds).

En effet en vol de croisière, un apport complémentaire de sustentation par le rotor arrière accroit inopportunément la bosse d'assiette (effet du souffle du rotor sur l'empennage du giravion), dégrade la stabilité du giravion et génère une consommation excessive de carburant. En conséquence, l'exploitation permanente d'un rotor arrière pour procurer un apport complémentaire de sustentation est inopportune, notamment dans le cas où le giravion évolue aux vitesses de croisière voire encore lorsque le giravion n'est pas lourdement chargé.

Il apparaît qu'une recherche constante dans le domaine des giravions réside dans l'organisation d'un rotor arrière procurant non seulement un contrôle de l'attitude du giravion en lacet, mais aussi permettant de propulser le giravion suivant d'autres directions progression, tel que suivant l'axe de gravité pour fournir un apport de sustentation du giravion ou tel que suivant les autres directions de progression du giravion en translation.

Une telle recherche implique des choix relatifs aux exploitations faites de la poussée générée par le rotor arrière pour fournir prioritairement ou subsidiairement une poussée transversale, une poussée verticale ou une poussée horizontale.

Cependant, un compromis doit être trouvé entre une telle recherche d'exploitation optimisée de la poussée fournie par le rotor arrière et la simplicité de structure du rotor arrière. En effet, il est à éviter de complexifier outre mesure l'organisation du rotor arrière au regard des avantages procurés en marge d'un choix fait de l'exploitation prioritaire du rotor arrière pour contrôler l'attitude du giravion en lacet.

La présente invention a pour objet un giravion équipé d'un rotor arrière à axe d'entrainement en rotation sensiblement horizontal procurant principalement un contrôle de l'attitude en lacet du giravion et subsidiairement procurant selon les besoins une poussée suivant au moins une autre direction de progression du giravion.

Dans ce contexte, il ne doit pas être perdu de vue la recherche dudit compromis précédemment visé. En outre, le passage d'une exploitation à l'autre de la poussée générée par le rotor arrière est souhaité être procuré progressivement et temporairement selon les besoins, en évitant un déséquilibre du rotor arrière et/ou un risque de déstabilisation temporaire du giravion. Il doit aussi être évité d'alourdir outre mesure l'extrémité de la poutre de queue.

Le giravion de la présente invention est équipé d'au moins un rotor principal à axe d'entrainement en rotation sensiblement vertical et d'un rotor arrière anticouple à axe d'entrainement en rotation sensiblement horizontal. Ledit rotor arrière est monté à l'extrémité d'une poutre de queue du giravion par l'intermédiaire d'un châssis logeant des moyens de transmission de puissance mécanique entre un moyeu du rotor arrière et un arbre moteur orienté transversalement audit axe d'entrainement du rotor arrière.

Un tel châssis est notamment classiquement formé par une boîte de transmission de puissance mécanique interposée entre le moyeu et l'arbre moteur qui s'étend classiquement le long de la poutre de queue du giravion.

L'axe d'entrainement du rotor arrière est disposé suivant une orientation constante sensiblement horizontale et orthogonale à l'orientation du plan vertical s'étendant suivant l'orientation d'extension longitudinale du giravion.

Ces dispositions sont telles que le disque rotor formé par la voilure tournante du rotor arrière est principalement disposé suivant une orientation longitudinale-verticale (pour rappel disque rotor classiquement orienté verticalement et longitudinalement par rapport au giravion, en étant classiquement disposé latéralement à la poutre de queue), de sorte que le rotor arrière est essentiellement générateur d'une composante vectorielle transversale de poussée contrôlant le comportement en lacet du giravion.

Ledit moyeu est porteur de ladite voilure composée d'une pluralité de pales montées individuellement mobiles sur le moyeu au moins en pivotement autour d'un axe de variation de pas. Le rotor arrière est équipé d'un mécanisme de manoeuvre en pivotement des pales autour de leur dit axe de variation de pas conformément à des commandes de variation de pas générées par un pilote du giravion.

II est compris que ledit pilote du giravion peut être indifféremment un pilote humain ou un pilote automatique dont la mise en oeuvre est commandée par le pilote humain.

Ledit mécanisme de manoeuvre comprend un plateau de commande placé en prise tournante avec le moyeu. Le plateau de commande est muni de bielles de manoeuvre des pales en prises respectives avec des leviers de pas équipant individuellement les pales. Le plateau de commande est monté tournant sur une tige de commande montée coaxiale et mobile en translation suivant l'axe d'entrainement du rotor arrière. La tige de commande est manoeuvrable en translation par un premier actionneur dont la mise en oeuvre est régulée par des moyens de commande conformément aux commandes de variation de pas générées par un pilote du giravion.

La mise en oeuvre du premier actionneur par les moyens de commande provoque une variation collective du pas des pales du rotor arrière modifiant l'amplitude de la poussée générée par le rotor arrière. Le mécanisme de manoeuvre comporte en outre des moyens générateurs d'une variation cyclique du pas des pales du rotor arrière.

Selon la présente invention, le plateau de commande est monté sur la tige de commande en générant une variation cyclique permanente du pas des pales du rotor arrière, le plateau de commande étant disposé dans son plan général suivant un plan de montage d'orientation constante par rapport à l'axe d'entrainement du rotor arrière.

Par ailleurs, la tige de commande est manoeuvrable en pivotement coaxial autour de l'axe d'entrainement du rotor arrière par un deuxième actionneur dont la mise en oeuvre est placée sous la dépendance des moyens de commande. Une manoeuvre de la tige de commande en pivotement par le deuxième actionneur entre deux positions extrêmes prédéfinies provoque un changement d'orientation angulaire du plateau de commande dans ledit plan de montage et par suite modifie l'orientation dudit disque rotor.

Ces dispositions sont telles qu'une manoeuvre en pivotement de la tige de commande par le deuxième actionneur vers une première position extrême provoque une manoeuvre du plateau de commande dans le plan de montage vers une première orientation angulaire extrême. Le plateau de commande étant disposé suivant la première orientation angulaire extrême, la variation cyclique du pas des pales du rotor arrière est principalement génératrice d'une composante vectorielle verticale de poussée. Une telle composante vectorielle verticale de poussée est classiquement orientée suivant l'orientation d'extension verticale du giravion et comporte en elle-même en tout ou rien une composante vectorielle orientée suivant l'axe de gravité.

Ces dispositions sont encore telles qu'une manoeuvre en pivotement de la tige de commande par le deuxième actionneur vers une deuxième position extrême provoque une manoeuvre du plateau de commande vers une deuxième orientation angulaire extrême. Le plateau de commande étant disposé suivant la deuxième orientation angulaire extrême, la variation cyclique du pas des pales du rotor arrière est principalement génératrice d'une composante vectorielle longitudinale de poussée. Une telle composante vectorielle longitudinale de poussée est classiquement orientée suivant l'orientation d'extension longitudinale du giravion et procure une propulsion du giravion en translation dans son plan longitudinal d'extension.

Bien évidemment, les amplitudes respectives de la composante vectorielle verticale de poussée et de la composante vectorielle longitudinale de poussée sont régulées en variant inversement conformément aux manoeuvres du plateau de commande entre lesdites orientations angulaires extrêmes.

Il résulte de ces dispositions que la mise en oeuvre du mécanisme de manoeuvre est régulée par les moyens de commande de sorte que la poussée générée par le rotor arrière procure essentiellement un contrôle de l'attitude en lacet du giravion et à moindres mesures selon les besoins un apport de sustentation du giravion et/ou un apport de propulsion en translation du giravion dans son plan longitudinal d'extension.

De surcroît, l'apport de sustentation du giravion et l'apport de propulsion en translation du giravion par le rotor arrière peuvent être sélectivement favorisés selon des cas de vol distincts, en étant provoqués progressivement avec pour avantage d'éviter un déséquilibre en vol du giravion lors d'un tel passage.

L'organisation du mécanisme de manoeuvre est structurellement simple en évitant notamment de monter mobile en nutation un quelconque organe du mécanisme de manoeuvre, tel que pratiqué habituellement pour faire varier cycliquement le pas des pales d'un rotor.

Le montage du rotor arrière sur la poutre de queue est équilibré autour de son axe d'entrainement, la tige de commande étant mobile tant en translation qu'en rotation suivant l'orientation de l'axe d'entrainement du rotor arrière monté fixe sur la poutre de queue. Un alourdissement de l'extrémité de la poutre de queue est ainsi évité et le rotor arrière peut être produit industriellement à des coûts compétitifs.

L'apport de sustentation du giravion par le rotor arrière n'est pas obtenu tel que classiquement par montage du rotor arrière sur la poutre de queue du giravion en orientant son axe d'entrainement de manière penchée par rapport à l'orientation du plan horizontal d'extension du giravion, mais par l'intermédiaire de la manoeuvre en pivotement de la tige de commande par le deuxième actionneur suivant un premier sens de manoeuvre.

L'apport régulé de sustentation du giravion par le rotor arrière permet d'éviter l'utilisation d'un empennage horizontal basculant et permet d'augmenter la marge de manoeuvre du giravion à l'atterrissage vis-à-vis d'un touché au sol d'une béquille équipant classiquement l'extrémité de la poutre de queue.

L'apport de propulsion en translation du giravion par le rotor arrière n'est pas obtenu tel que classiquement par montage basculant du rotor arrière sur la poutre de queue du giravion modifiant l'orientation de son axe d'entrainement, mais par l'intermédiaire de la manoeuvre en pivotement de la tige de commande par le deuxième actionneur suivant un deuxième sens de manoeuvre inverse au premier sens de manoeuvre.

L'apport de sustentation du giravion par le rotor arrière peut être favorisé pour des premiers cas de vol pour lesquels un tel apport de sustentation du giravion est opportun, l'apport de propulsion en translation du giravion par le rotor arrière étant alors de fait avantageusement significativement diminué pour tendre à être nul.

Les premiers cas de vol sont notamment identifiés en fonction de la masse de la charge embarquée à bord du giravion et/ou en fonction des conditions de centrage arrière de la masse du giravion prenant notamment en compte l'embarquement d'emports en soute et/ou par élingage, et/ou en fonction de la vitesse de progression du giravion identifiée conforme à une progression du giravion en vol stationnaire et/ou à basses vitesses.

Par exemple, un apport de sustentation du giravion par le rotor arrière est particulièrement avantageux au décollage du giravion porteur de charges lourdes, et/ou dans le cas où le giravion évolue en vol stationnaire et/ou à basses vitesses. Par exemple encore, la régulation de l'apport de sustentation du giravion par le rotor arrière facilite la tenue d'assiette du giravion par le pilote et la gestion du centrage arrière de la masse du giravion, notamment en cas d'embarquement d'emports de masses potentiellement diverses.

De même, l'apport de propulsion en translation du giravion par le rotor arrière peut être favorisé pour des deuxièmes cas de vol distincts des premiers cas de vol, pour lesquels ledit apport de propulsion en translation est opportun. L'apport de sustentation du giravion par le rotor arrière est alors de fait avantageusement significativement diminué pour tendre à être nul.

Les deuxièmes cas de vol sont notamment identifiés selon une progression en translation du giravion à vitesses élevées, aux vitesses de croisière communément admises supérieures à 75 kt.

Selon un exemple de montage du plateau de commande, le plateau de commande est monté coaxial sur la tige de commande en étant disposé suivant un plan de montage orienté orthogonalement au plan vertical d'extension transversal du giravion et incliné par rapport à l'axe d'entrainement du rotor arrière. Le plateau de commande est manoeuvrable entre lesdites orientations angulaires extrêmes par pivotement coaxial autour de l'axe d'entrainement du rotor arrière.

L'angle d'inclinaison du plateau de commande par rapport à l'axe d'entrainement du rotor arrière est à titre indicatif compris entre 10° et 30°.

Le plateau de commande est par exemple monté par l'intermédiaire d'au moins un organe de roulement sur une collerette de la tige de commande inclinée suivant le plan de montage du plateau de commande.

Selon un autre exemple de montage du plateau de commande, le plateau de commande est monté sur la tige de commande en étant disposé suivant un plan de montage orthogonal à l'axe d'entrainement du rotor arrière. L'axe de rotation du plateau de commande est parallèlement excentré par rapport à l'axe d'entrainement du rotor arrière. Le plateau de commande est manoeuvrable entre lesdites orientations angulaires extrêmes par déplacement angulaire du plateau de commande dans ledit plan de montage autour de l'axe d'entrainement du rotor arrière.

Le plateau de commande est par exemple monté par l'intermédiaire d'au moins un organe de roulement sur un doigt cylindrique porté à distance radiale de l'axe d'entrainement du rotor arrière par une aile radialement étendue de la tige de commande.

A titre indicatif, la tige de commande est manoeuvrable par le deuxième actionneur entre lesdites positions extrêmes suivant une plage angulaire de pivotement pouvant s'étendre de 0° à 90°.

Le premier actionneur et le deuxième actionneur sont notamment constitués de servocommandes placées en prise avec l'extrémité proximale de la tige de commande opposée à son extrémité distale porteuse du plateau de commande. De telles servocommandes sont potentiellement et indifféremment des servocommandes de type rotatives ou des servocommandes de type translatives.

Le plateau de commande est de préférence placé en prise tournante avec le moyeu par l'intermédiaire d'une structure articulée, telle qu'agencée en compas, en soufflet, en bielles tangentielles ou en bielles de pas encastrées par exemple.

Un procédé de mise en oeuvre d'un giravion conformément à la présente invention comprend principalement une opération de contrôle de l'attitude du giravion en lacet, classiquement opérée par variation collective du pas des pales du rotor arrière. Ledit procédé comprend encore des opérations d'exploitation subsidiaire de la poussée produite par le rotor arrière par variation cyclique du pas des pales du rotor arrière, ladite variation cyclique étant permanente.

De telles opérations d'exploitation subsidiaire de la poussée produite par le rotor arrière procurent respectivement un apport de sustentation et/ou un apport de propulsion en translation du giravion selon des cas de vol respectifs identifiés par l'instrumentation de bord du giravion.

Plus particulièrement, un procédé de mise en oeuvre d'un giravion de la présente invention comprend principalement une opération de contrôle de l'attitude en lacet du giravion, une opération d'apport régulé de sustentation du giravion par le rotor arrière et une opération d'apport régulé de propulsion en translation du giravion par le rotor arrière.

Ladite opération de contrôle de l'attitude du giravion en lacet comprend notamment les étapes suivantes :
-) émission par le pilote du giravion d'une commande de variation de pas collectif des pales du rotor arrière procurant un contrôle de l'attitude en lacet du giravion,
-) transmission de ladite commande de variation de pas collectif des pales aux moyens de commande,
-) activation par les moyens de commande du premier actionneur conformément à la commande de variation de pas collectif des pales, provoquant un déplacement en translation de la tige de commande.

Ladite opération d'apport régulé de sustentation du giravion par le rotor arrière comprend notamment les étapes suivantes :
-) émission par le pilote du giravion d'une première commande de vol relative à une requête d'apport de sustentation du giravion par le rotor arrière,
-) transmission de ladite première commande de vol aux moyens de commande,
-) activation par les moyens de commande du deuxième actionneur conformément à ladite première commande de vol provoquant une manoeuvre en pivotement de la tige de commande vers ladite première position extrême.

Ladite opération d'apport régulé de propulsion en translation du giravion par le rotor arrière comprend les étapes suivantes :
-) émission par le pilote du giravion d'une deuxième commande de vol relative à une requête de poussée propulsive du giravion en translation par le rotor arrière,
-) transmission de la deuxième commande de vol aux moyens de commande,
-) activation par les moyens de commande du deuxième actionneur provoquant une manoeuvre en pivotement de la tige principale vers ladite deuxième position extrême.

La première commande de vol est avantageusement générée par un pilote du giravion selon l'une au moins des informations suivantes fournies par l'instrumentation de bord du giravion :
-) la vitesse de progression du giravion, et plus particulièrement une identification par l'instrumentation de bord d'une progression du giravion en vol stationnaire et/ou à basses vitesses,
-) la masse globale du giravion incluant au moins la masse de sa structure propre et de préférence la masse d'emports, voire encore la masse courante de carburant embarqué,
-) les conditions de centrage arrière de ladite masse globale du giravion.

La deuxième commande de vol est avantageusement générée par un pilote du giravion selon une information fournie par l'instrumentation de bord du giravion relative à une progression du giravion à vitesses élevées.

Bien évidemment, l'amplitude de la manoeuvre en pivotement de la tige de commande est calculée par les moyens de commande pour réguler l'orientation de la poussée produite par le rotor arrière selon les amplitudes respectives de la composante vectorielle verticale de poussée et de la composante vectorielle longitudinale à fournir conformément aux différentes dites commandes de vol émises par le pilote.

Des exemples de réalisation de la présente invention vont être décrits en relation avec les figures des planches annexées, dans lesquelles :
- la fig.1 est composée de deux schémas (a) et (b) illustrant un giravion muni d'un rotor arrière dont le disque rotor est disposé suivant une orientation longitudinale-verticale, respectivement en vue de dessus pour le schéma (a) et en vue de côté pour le schéma (b).
- la fig.2 est composée de deux schémas (c) et (d) illustrant un giravion muni d'un rotor arrière dont le disque rotor est disposé suivant une orientation transversale-verticale, respectivement en vue de dessus pour le schéma (c) et en vue arrière pour le schéma (d).
- la fig.3 est composée de deux schémas (e) et (f) illustrant un giravion muni d'un rotor arrière dont le disque rotor est disposé suivant une orientation longitudinale-penchée, respectivement en vue de dessus pour le schéma (e) et en vue arrière pour le schéma (f).
- la fig.4 est une illustration en perspective d'un rotor arrière de giravion selon une forme de réalisation de la présente invention.
- les fig.5 et fig.6 sont des illustrations schématiques en coupes axiales d'un rotor arrière de giravion selon des formes respectives de réalisation de la présente invention.
- les fig.7, fig.8 et fig.9 sont des schémas illustrant diverses opérations d'un procédé de mise en oeuvre des rotors arrière représentés sur les fig.4 à fig.6.

Les organes communs représentés sur les différentes figures sont respectivement identifiés avec les mêmes numéros de référence.

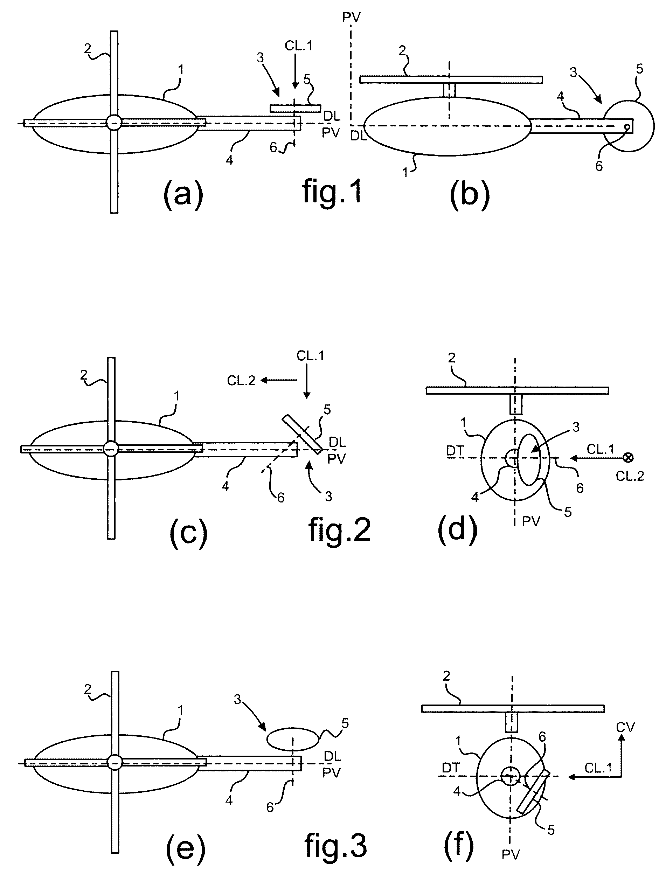

Sur les fig.1 à fig.3, un giravion 1 est équipé d'un rotor principal 2 à axe d'entrainement en rotation sensiblement vertical et d'un rotor arrière 3 à axe d'entrainement en rotation sensiblement horizontal. Le rotor principal 2 procure au moins la sustentation du giravion 1, voire aussi sa propulsion et/ou son changement d'attitude suivant une quelconque direction de progression. Le rotor arrière 3 est un rotor anticouple monté à l'extrémité d'une poutre de queue 4 du giravion 1 pour procurer un contrôle de l'attitude en lacet du giravion 1.

Classiquement, un rotor de giravion comporte une voilure tournante composée d'au moins deux pales (quatre pales sur les exemples de réalisation illustrés). Les pales sont montées sur un moyeu entraîné en rotation, un disque rotor 5 étant typiquement formé par le cercle décrit par l'extrémité des pales de la voilure tournante.

Sur la fig.1, l'axe d'entrainement 6 du rotor arrière 3 est monté à l'extrémité de la poutre de queue 4 en étant en permanence orienté suivant une orientation constante sensiblement horizontale et orthogonale à l'orientation du plan vertical PV d'extension du giravion 1 s'étendant suivant la direction longitudinale DL d'extension du giravion 1. Le disque rotor 5 est ainsi disposé suivant une orientation longitudinale-verticale par rapport au giravion 1, dans laquelle le disque rotor 5 est orienté verticalement et longitudinalement en étant disposé latéralement à la poutre de queue 4 du giravion 1.

Ces dispositions sont telles que le rotor arrière 3 génère une poussée comportant pour l'essentiel une composante vectorielle transversale de poussée CL1 procurant le contrôle de l'attitude du giravion 1 en lacet.

Sur la fig.2, l'axe d'entrainement 6 du rotor arrière 3 est orienté sensiblement horizontalement en étant incliné par rapport à l'orientation du plan vertical PV d'extension du giravion 1, en s'étendant suivant la direction longitudinale DL d'extension du giravion 1. Le disque rotor 5 est ainsi disposé suivant une orientation verticale-transversale par rapport au giravion 1 dans laquelle le disque rotor 5 est orienté verticalement en étant incliné par rapport à la direction longitudinale DL d'extension du giravion 1.

Ces dispositions sont telles que le rotor arrière 3 génère une poussée comportant une composante vectorielle transversale de poussée CL1 procurant le contrôle en lacet du giravion 1. La poussée générée par le rotor arrière 3 comporte aussi une composante vectorielle longitudinale de poussée CL2 procurant une propulsion du giravion 1 en translation suivant son plan longitudinal d'extension.

Classiquement selon l'art antérieur et tel qu'illustré sur la fig.2, la disposition du disque rotor 5 suivant une orientation transversale-verticale est réalisée en inclinant l'axe d'entrainement 6 du rotor arrière 3 par rapport à la direction longitudinale DL d'extension du giravion 1. Une telle inclinaison peut être conférée par basculement du rotor arrière 3 modifiant l'orientation de son axe d'entrainement 6.

Sur la fig.3, le disque rotor 5 est disposé suivant une orientation longitudinale-penchée par rapport au giravion 1, dans laquelle le disque rotor 5 est disposé latéralement à la poutre de queue 4 du giravion 1 en étant incliné par rapport à l'orientation du plan vertical PV d'extension du giravion 1 s'étendant suivant la direction longitudinale DL d'extension du giravion 1.

Ces dispositions sont telles que le rotor arrière 3 génère une poussée comportant une composante vectorielle transversale de poussée CL1 procurant la stabilisation et/ou le guidage du giravion 1 en lacet et une composante vectorielle verticale CV de poussée procurant un apport de sustentation du giravion 1 en complément de la sustentation principalement fournie par le rotor principal 2. Pour procurer ledit apport de sustentation du giravion 1 par le rotor arrière 3, une telle composante vectorielle verticale CV de poussée, orientée suivant la direction verticale d'extension du giravion 1, comprend bien évidemment elle-même en tout ou partie une composante vectorielle de poussée orientée suivant l'axe de gravité.

Classiquement selon l'art antérieur et tel qu'illustré sur la fig.3, la disposition du disque rotor 5 suivant une orientation longitudinale-penchée est réalisée en inclinant l'axe d'entrainement 6 du rotor arrière 3 dans le plan vertical considéré suivant la direction transversale DT d'extension du giravion 1.

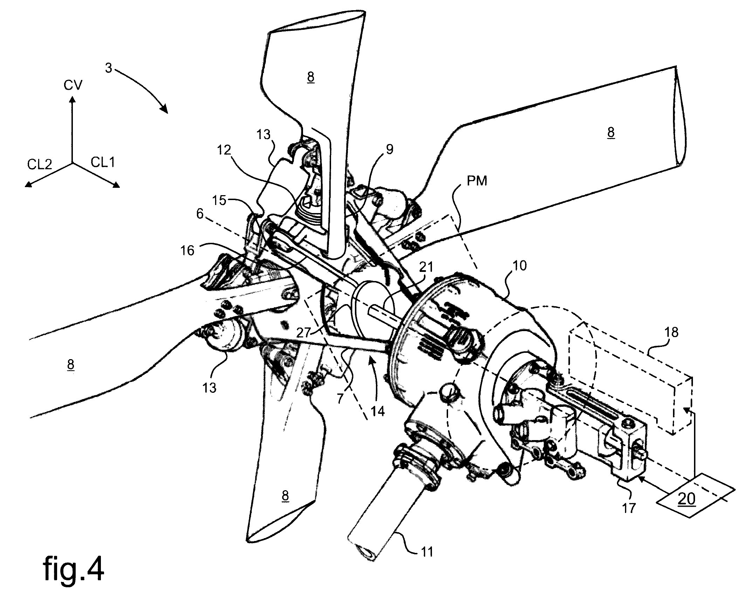

Sur la fig.4, un rotor arrière 3 anticouple comporte classiquement un moyeu 7 sur lequel sont montées des pales 8 par l'intermédiaire de pieds de pale 9 respectifs. Le moyeu 7 est monté sur un châssis 10 formé d'une boîte de transmission de puissance mécanique à renvoi d'angle entre un arbre moteur 11 et le moyeu 7. Le rotor arrière 3 représenté sur la fig.4 est monté sur le châssis 10 de sorte que son axe d'entrainement 6 est orienté en permanence sensiblement orthogonalement à l'axe de rotation de l'arbre moteur 11 qui s'étend le long de la poutre de queue du giravion.

Selon une telle configuration et conformément à la présente invention, le rotor arrière 3 est monté à l'extrémité de la poutre de queue du giravion de sorte que l'axe d'entrainement 6 du rotor arrière 3 est orienté en permanence suivant une orientation constante sensiblement horizontale et orthogonale au plan vertical PV s'étendant suivant la direction longitudinale DL d'extension du giravion 1 tel qu'illustré sur la fig.1.

Classiquement, les pales 8 du rotor arrière 3 sont collectivement manoeuvrables en pivotement autour d'axes de variation de pas individuels. A titre indicatif, les pales 8 sont montées sur le moyeu 7 en étant aussi mobiles en traînée et en battement. Dans ce contexte et sur l'exemple de réalisation illustré, les pales 8 sont montées sur le moyeu 7 par l'intermédiaire de butées lamifiées sphériques 12, des amortisseurs de traînée 13 étant placés en prise individuelle sur les pales 8 et sur le moyeu 7.

Les pales 8 sont manoeuvrées collectivement en pivotement autour de leur axe de variation de pas par un mécanisme de manoeuvre 14 conformément à des commandes de variation collective de pas générées par un pilote du giravion. Une manoeuvre en pivotement des pales 8 collectivement autour de leur axe de variation de pas permet de réguler l'amplitude de la poussée produite par le rotor arrière 3.

A cet effet, les pales 8 sont typiquement chacune munies d'un levier de pas 15 en prise sur une bielle de manoeuvre 16 que comprend ledit mécanisme de manoeuvre 14.

Le mécanisme de manoeuvre 14 comprend des actionneurs 17,18 constitués de servocommandes dont la mise en oeuvre est placée sous la dépendance de moyens de commande 20 activés en fonction de commandes de vol générées par le pilote.

Un premier actionneur 17 est monté sur le châssis 10 en étant orienté suivant l'axe d'entrainement 6 du rotor arrière 3. Le premier actionneur 17 est dédié à une manoeuvre en translation d'une tige de commande 21 du mécanisme de manoeuvre 14. Un deuxième actionneur 18 est monté sur le châssis 10 latéralement à la tige de commande 21 et est dédié à une manoeuvre en pivotement de la tige de commande 21 autour de l'axe d'entrainement 6 du rotor arrière 3.

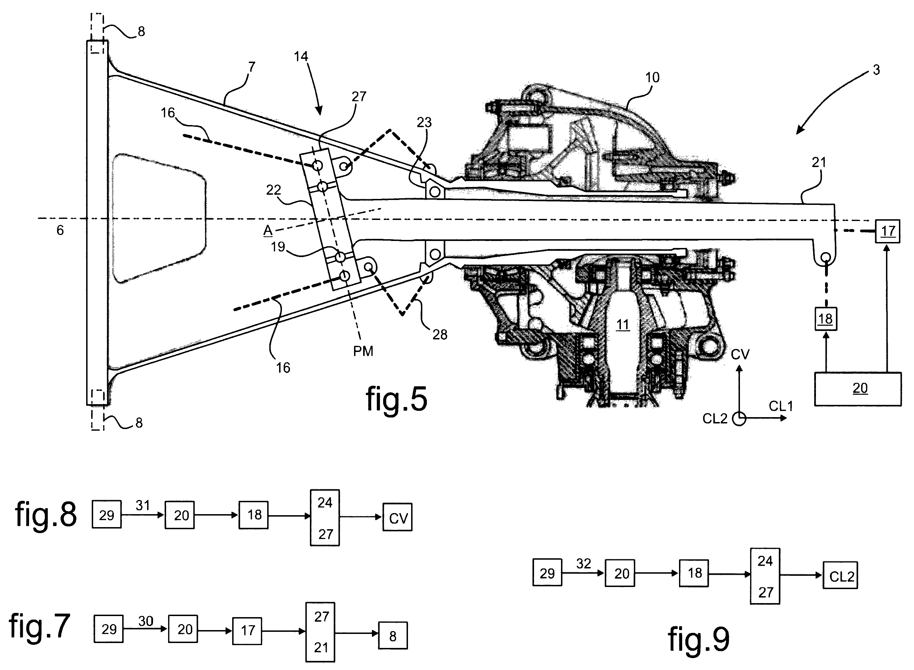

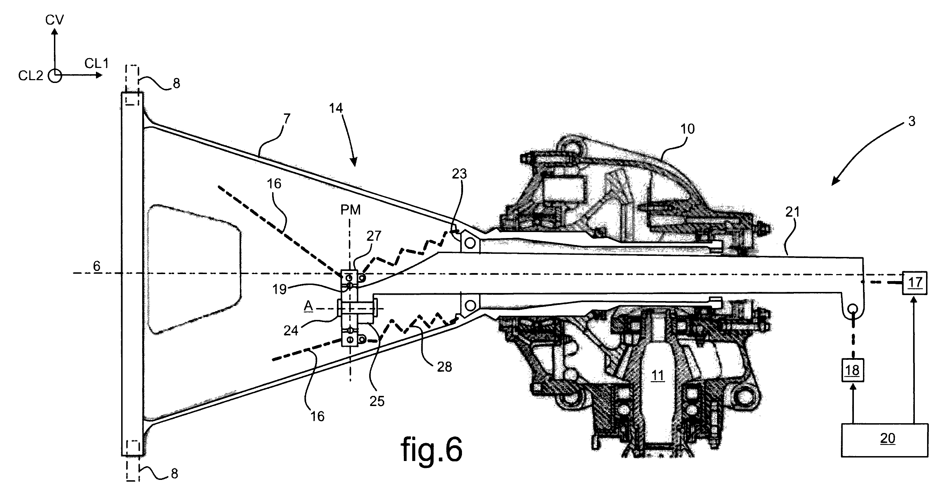

Différents exemples de réalisation d'un tel mécanisme de manoeuvre 14 relevant de la présente invention sont respectivement illustrés sur les fig.5 et fig.6.

Sur les fig.5 et fig.6, le mécanisme de manoeuvre 14 comprend une tige de commande 21 montée coaxiale sur le châssis 10 suivant l'axe d'entrainement 6 du rotor arrière 3, en s'étendant à l'intérieur du moyeu 7. La tige de commande 21 est en prise à son extrémité proximale avec les actionneurs 17,18 et est porteuse à son extrémité distale d'un plateau de commande 27 par l'intermédiaire d'un organe de roulement 19.

Le plateau de commande 27 est relié à chacune des pales 8 du rotor arrière par l'intermédiaire desdites bielles de manoeuvre 16 individuelle des pales 8 en pivotement autour de leur axe de variation de pas. Le plateau de commande 27 est relié au moyeu 7 par l'intermédiaire d'une structure articulée 28 pour son entraînement en rotation par le moyeu 7. Sur la fig.5, ladite structure articulée 28 est agencée en compas. Sur la fig.6, ladite structure articulée 28 est agencée en soufflet formé d'éléments rigides articulés entre eux.

Il est proposé de provoquer en permanence une variation cyclique des pales 8 du rotor arrière 3 avec pour effet de générer en permanence au moins une composante vectorielle annexe de poussée CL2 et/ou CV distincte de la composante vectorielle transversale de poussée CL1 principalement générée par le rotor arrière 3 pour contrôler l'attitude en lacet du giravion.

Ladite composante vectorielle annexe de poussée CL2 et/ou CV est sélectivement exploitée selon des cas de vol distincts pour procurer selon des besoins spécifiques un apport de sustentation du giravion ou un apport de propulsion en translation du giravion suivant son plan d'extension horizontal.

Cependant, de tels apports de sustentation et/ou de propulsion en translation du giravion sont utiles pour certains cas de vol en marge de la fonction principale du rotor arrière 3 consistant à procurer le contrôle de l'attitude en lacet du giravion.

Il est en conséquence souhaité de ne pas complexifier outre mesure la structure du rotor arrière 3, notamment en évitant un montage en nutation d'un quelconque organe du mécanisme de manoeuvre 14, afin de limiter l'alourdissement de la poutre de queue du giravion et aussi de permettre une réalisation à des coûts compétitifs ainsi qu'une implantation aisée du rotor arrière 3 sur la poutre de queue du giravion.

A cet effet, le plateau de commande 27 est monté tournant sur la tige de commande 21 en étant orienté dans son plan général suivant un plan de montage PM d'orientation constante par rapport à l'axe d'entrainement 6 du rotor arrière 3. Le montage du plateau de commande 27 sur la tige de commande 21 génère en permanence une variation cyclique du pas des pales 8 du rotor arrière 3.

Par exemple sur la fig.5, le plateau de commande 27 est monté sur la tige de commande 21 en étant disposé suivant un plan de montage PM incliné par rapport à l'axe d'entrainement 6 du rotor arrière 3. Le plateau de commande 27 est monté sur une collerette 22 de la tige de commande 21, ladite collerette 22 étant inclinée frontalement par rapport à un plan orthogonal à l'axe d'entrainement 6 du rotor arrière 3.

Par exemple encore sur la fig.6, le plateau de commande 27 est monté sur la tige de commande 21 en étant disposé suivant un plan de montage PM orthogonal à l'axe d'entrainement 6 du rotor arrière 3. Dans ce cas, l'axe de rotation A du plateau de commande 27 est excentré par rapport à l'axe d'entrainement 6 du rotor arrière 3.

Sur l'exemple de réalisation illustré sur la fig.6, l'axe de rotation A du plateau tournant 27 s'étend parallèlement à l'axe d'entrainement 6 du rotor arrière 3 en étant radialement décalé par rapport à l'axe d'entrainement 6 du rotor arrière 3. A cet effet, le plateau de commande 27 est monté tournant sur un doigt cylindrique 24 monté sur une aile 25 radialement étendue de la tige de commande 21.

La tige de commande 21 est manoeuvrable par les actionneurs 17,18 dont les activations respectives modifient les effets produits par la poussée générée par le rotor arrière 3.

Plus particulièrement, un premier actionneur 17 est dédié à la manoeuvre de la tige de commande 21 en translation suivant l'axe d'entrainement 6 du rotor arrière 3 pour faire varier collectivement le pas des pales 8 du rotor arrière 3. Un deuxième actionneur 18 est dédié à la manoeuvre de la tige de commande 21 en pivotement coaxial autour de l'axe d'entrainement 6 du rotor arrière 3.

La tige de commande 21 est manoeuvrable en pivotement par le deuxième actionneur 18 entre deux positions extrêmes prédéfinies manoeuvrant le plateau de commande 27 entre des orientations angulaires respectives dans le plan de montage PM. La manoeuvre du plateau de commande 27 par la tige de commande 21 modifiant son orientation angulaire résulte de fait par la prise du plateau de commande 27 avec les pales 8 et par la prise d'appui axial du plateau de commande 27 contre la tige de commande 21 par l'intermédiaire des organes de roulement 19.

Sur la fig.5, la manoeuvre du plateau de commande 27 modifiant son orientation angulaire dans le plan de montage est une manoeuvre en pivotement coaxial du plateau de commande 27 suivant l'axe d'entrainement 6 du rotor arrière 3. Sur la fig.6, la manoeuvre du plateau de commande 27 modifiant son orientation angulaire est une manoeuvre par déplacement angulaire du plateau de commande 27 dans le plan de montage PM.

Dans une première position extrême de la tige de commande 21, le plateau de commande 27 est placé dans une première orientation angulaire extrême dans laquelle ladite composante vectorielle annexe de poussée est une composante vectorielle verticale CV de poussée procurant un apport de sustentation du giravion. Dans une deuxième position extrême de la tige de commande 21, le plateau de commande 27 est placé dans une deuxième orientation angulaire extrême dans laquelle ladite composante vectorielle annexe de poussée est une composante vectorielle longitudinale CL2 de poussée procurant un apport de propulsion en translation du giravion.

Selon les commandes de vol générées par un pilote du giravion, le mécanisme de manoeuvre 14 des pales 8 du rotor arrière 3 régule l'amplitude de la poussée générée par le rotor arrière 3 et la répartition de cette poussée entre principalement ladite composante vectorielle transversale CL1 de poussée procurant prioritairement le contrôle de l'attitude en lacet du giravion 1 et les dites composantes vectorielles annexes CL2 et CV dont les amplitudes varient inversement selon les besoins identifiés par des cas de vol prédéfinis du giravion.

Plus particulièrement sur la fig.7, un pilote 29 du giravion génère une commande de variation de pas collectif 30 des pales du rotor arrière pour faire varier l'amplitude de la poussée produite par le rotor arrière.

La commande de variation de pas collectif 30 des pales est transmise aux moyens de commande 20 qui activent le premier actionneur 17 avec pour effet de déplacer en translation la tige de commande 21 et par suite de déplacer en translation le plateau de commande 27. Cette opération a pour effet de faire varier le pas des pales 8 collectivement et finalement a pour effet de faire varier l'amplitude de la poussée produite par le rotor arrière.

Plus particulièrement encore sur la fig.8, un pilote 29 du giravion génère une première commande de vol 31 pour procurer un apport de sustentation du giravion par le rotor arrière. La première commande de vol 31 est transmise aux moyens de commande 20 qui activent le deuxième actionneur 18 pour manoeuvrer en pivotement la tige de commande 21 suivant un premier sens de rotation vers la première position extrême avec pour effet de provoquer une modification de l'orientation angulaire du plateau de commande 27. Le plateau de commande 27 étant disposé dans ladite première orientation angulaire extrême, une composante vectorielle verticale CV de poussée est générée par le rotor arrière.

Sur la fig.9, un pilote 29 du giravion génère une deuxième commande de vol 32 relative à une requête d'apport de propulsion en translation du giravion 1 par le rotor arrière 3. La deuxième commande de vol 32 est transmise aux moyens de commande 20 qui activent le deuxième actionneur 18 pour manoeuvrer en pivotement la tige de commande 21 vers la deuxième position extrême suivant un deuxième sens de rotation inverse au premier sens de rotation. Par suite, l'orientation angulaire du plateau de commande 27 est modifiée pour provoquer le passage du plateau de commande 27 vers ladite deuxième orientation angulaire extrême. Le plateau de commande 27 étant disposé dans ladite deuxième orientation angulaire extrême, une composante vectorielle longitudinale CL2 de poussée est générée par le rotor arrière.

L'orientation de l'axe d'entrainement 6 du rotor arrière 3 étant maintenue constante de par le montage fixe du rotor arrière 3 sur la poutre de queue 4 du giravion 1, les apports éventuels de sustentation et/ou de propulsion en translation du giravion fournis par le rotor arrière 3 sont obtenus par une variation d'orientation du plateau de commande 27 et par suite par variation de l'orientation du disque rotor 5 entre ladite orientation longitudinale-penchée et ladite orientation transversale-verticale.

Les amplitudes respectives de la composante vectorielle verticale de poussée CV et/ou de la composante vectorielle longitudinale de poussée CL2 produites par le rotor arrière 3 sont sélectivement générées et/ou régulées par variation du pas collectif des pales modifiant l'amplitude de la poussée générée par le rotor arrière 3 et/ou par variation de l'orientation angulaire du plateau de commande 27 dans ledit plan de montage PM provoquant la variation d'orientation du disque rotor 5.

## Revendications

1. Giravion (1) équipé d'au moins un rotor principal (2) à axe d'entrainement en rotation sensiblement vertical et d'un rotor arrière (3) anticouple à axe d'entrainement en rotation (6) sensiblement horizontal, ledit rotor arrière (3) étant monté à l'extrémité d'une poutre de queue (4) du giravion (1) par l'intermédiaire d'un châssis (10) logeant des moyens de transmission de puissance mécanique entre un moyeu (7) du rotor arrière (3) et un arbre moteur (11) orienté transversalement audit axe d'entrainement (6) du rotor arrière (3),
-) l'axe d'entrainement (6) du rotor arrière (3) étant disposé suivant une orientation constante sensiblement horizontale et orthogonale à l'orientation du plan vertical (PV) s'étendant suivant l'orientation d'extension longitudinale (DL) du giravion (1) de sorte que le disque rotor (5) formé par la voilure tournante du rotor arrière (3) est principalement disposé suivant une orientation longitudinale-verticale en étant essentiellement générateur d'une composante vectorielle transversale de poussée (CL1) contrôlant le comportement du giravion (1) en lacet,
-) ledit moyeu (7) étant porteur de ladite voilure tournante composée d'une pluralité de pales (8) montées individuellement mobiles sur le moyeu (7) au moins en pivotement autour d'un axe de variation de pas, le rotor arrière (3) étant équipé d'un mécanisme de manoeuvre (14) en pivotement des pales (8) autour de leur dit axe de variation de pas conformément à des commandes de variation de pas (30,31) générées par un pilote (29) du giravion (1),
-) ledit mécanisme de manoeuvre (14) comprenant un plateau de commande (27) en prise tournante avec le moyeu (7), le plateau de commande (27) étant muni de bielles de manoeuvre (16) des pales (8) en prises respectives avec des leviers de pas (15) équipant individuellement les pales (8), le plateau de commande (27) étant monté tournant sur une tige de commande (21) montée coaxiale et mobile en translation suivant l'axe d'entrainement (6) du rotor arrière (3) en étant manoeuvrable en translation par un premier actionneur (17) dont la mise en oeuvre est réglable par des moyens de commande (20) conformément aux dites commandes de variation de pas (30,31),
-) la mise en oeuvre du premier actionneur (17) par les moyens de commande (20) provoquant une variation collective du pas des pales (8) du rotor arrière (3) modifiant l'amplitude de la poussée générée par le rotor arrière, le mécanisme de manoeuvre (14) comportant en outre des moyens générateurs d'une variation cyclique du pas des pales (8) du rotor arrière (3),
caractérisé :
-) en ce que le plateau de commande (27) est monté sur la tige de commande (21) pour générer une variation cyclique permanente du pas des pales (8) du rotor arrière (3), le plan général du plateau de commande (27) étant disposé dans un plan de montage (PM) d'orientation constante par rapport à l'axe d'entrainement (6) du rotor arrière (3), et
-) en ce que la tige de commande (21) est manoeuvrable en pivotement coaxial autour de l'axe d'entrainement (6) du rotor arrière (3) par un deuxième actionneur (18) dont la mise en oeuvre est placée sous la dépendance des moyens de commande (20), de sorte qu'une manoeuvre en pivotement de la tige de commande (21) par le deuxième actionneur (18) entre deux positions extrêmes prédéfinies provoque un changement d'orientation angulaire du plateau de commande (27) dans ledit plan de montage (PM) et par suite modifie l'orientation dudit disque rotor (5),
de sorte que :
-) une manoeuvre en pivotement de la tige de commande (21) par le deuxième actionneur (18) vers une première position extrême provoque une manoeuvre du plateau de commande (27) dans le plan de montage (PM) vers une première orientation angulaire extrême dans laquelle la variation cyclique permanente du pas des pales (8) du rotor arrière (3) est principalement génératrice d'une composante vectorielle verticale (CV) de poussée,
-) une manoeuvre en pivotement de la tige de commande (21) par le deuxième actionneur (18) vers une deuxième position extrême provoque une manoeuvre du plateau de commande (27) dans le plan de montage (PM) vers une deuxième orientation angulaire extrême dans laquelle la variation cyclique permanente du pas des pales (8) du rotor arrière (3) est principalement génératrice d'une composante vectorielle longitudinale (CL2) de poussée.

2. Giravion selon la revendication 1,
**caractérisé en ce que** le plateau de commande (27) est monté coaxial sur la tige de commande (21) en étant disposé suivant un plan de montage (PM) orienté orthogonalement au plan vertical d'extension transversal du giravion et incliné par rapport à l'axe d'entrainement (6) du rotor arrière (3), le plateau de commande (27) étant manoeuvrable entre lesdites orientations angulaires extrêmes par pivotement coaxial autour de l'axe d'entrainement (6) du rotor arrière (3).

3. Giravion selon la revendication 2,
**caractérisé en ce que** l'angle d'inclinaison du plateau de commande (27) par rapport à l'axe d'entrainement (6) du rotor arrière (3) est compris entre 10° et 30°.

4. Giravion selon l'une quelconque des revendications 2 et 3, **caractérisé en ce que** le plateau de commande (27) est monté par l'intermédiaire d'au moins un organe de roulement (19) sur une collerette (22) de la tige de commande (21) inclinée suivant le plan de montage (PM) du plateau de commande (27).

5. Giravion selon la revendication 1,
**caractérisé en ce que** le plateau de commande (27) est monté sur la tige de commande (21) en étant disposé suivant un plan de montage (PM) orthogonal à l'axe d'entrainement (6) du rotor arrière (3), l'axe de rotation (A) du plateau de commande (27) étant parallèlement excentré par rapport à l'axe d'entrainement (6) du rotor arrière (3), le plateau de commande (27) étant manoeuvrable entre lesdites orientations angulaires extrêmes par déplacement angulaire du plateau de commande (27) dans ledit plan de montage (PM) autour de l'axe d'entrainement (6) du rotor arrière (3).

6. Giravion selon la revendication 5,
**caractérisé en ce que** le plateau de commande (27) est monté par l'intermédiaire d'au moins un organe de roulement (19) sur un doigt cylindrique (24) porté à distance radiale de l'axe d'entrainement (6) du rotor arrière (3) par une aile (25) radialement étendue de la tige de commande (21).

7. Giravion selon l'une quelconque des revendications 1 à 6,
**caractérisé en ce que** la tige de commande (21) est manoeuvrable par le deuxième actionneur (18) entre lesdites positions extrêmes suivant une plage angulaire de pivotement s'étendant de 0° à 90°.

8. Giravion selon l'une quelconque des revendications 1 à 7,
**caractérisé en ce que** le plateau de commande (27) est en prise tournante avec le moyeu (7) par l'intermédiaire d'une structure articulée (28).

9. Procédé de mise en oeuvre d'un giravion (1) selon l'une quelconque des revendications 1 à 8,
**caractérisé :**
**en ce qu'**une opération de contrôle de l'attitude du giravion (1) en lacet comprend les étapes suivantes :
-) émission par le pilote (29) du giravion (1) d'une commande de variation de pas collectif (30) des pales (8) procurant un contrôle de l'attitude en lacet du giravion (1),
-) transmission de ladite commande de variation de pas collectif (30) des pales (8) aux moyens de commande (20),
-) activation par les moyens de commande (20) du premier actionneur (17) conformément à ladite commande de variation de pas collectif (30) des pales (8), provoquant un déplacement en translation de la tige de commande (21),
**en ce qu'**une opération d'apport régulé de sustentation du giravion (1) par le rotor arrière (3) comprend les étapes suivantes :
-) émission par le pilote (29) du giravion (1) d'une première commande de vol (31) relative à une requête d'apport de sustentation du giravion (1) par le rotor arrière (3),
-) transmission de la première commande de vol (31) aux moyens de commande (20),
-) activation par les moyens de commande (20) du deuxième actionneur (18) conformément à ladite première commande de vol (31), provoquant une manoeuvre en pivotement de la tige de commande (21) vers ladite première position extrême, et
**en ce qu'**une opération d'apport régulé de propulsion en translation du giravion (1) par le rotor arrière (3) comprend les étapes suivantes :
-) émission par le pilote du giravion d'une deuxième commande de vol (32) relative à une requête de poussée propulsive du giravion (1) en translation par le rotor arrière (3),
-) transmission de la deuxième commande de vol (32) aux moyens de commande (20),
-) activation par les moyens de commande (20) du deuxième actionneur (18) provoquant une manoeuvre en pivotement de la tige principale (21) vers ladite deuxième position extrême.

10. Procédé selon la revendication 9,
**caractérisé en ce que** la première commande de vol (31) est générée par un pilote du giravion (1) selon l'une au moins des informations suivantes fournies par l'instrumentation de bord du giravion (1) :
-) la vitesse de progression du giravion (1) en vol stationnaire et/ou à basses vitesses,
-) la masse globale du giravion (1) incluant au moins la masse de sa structure propre et la masse d'emports,
-) les conditions de centrage arrière de ladite masse globale du giravion (1).

11. Procédé selon l'une quelconque des revendications 9 et 10,
**caractérisé en ce que** la deuxième commande de vol (32) est générée par un pilote du giravion (1) selon une information fournie par l'instrumentation de bord du giravion (1) relative à une progression du giravion (1) à vitesses élevées.

## Patentansprüche

1. Drehflügelflugzeug (1), welches ausgerüstet ist mit mindestens einem Hauptrotor (2), dessen Drehantriebsachse im Wesentlichen vertikal verläuft, und einem Drehmomentausgleichs-Heckrotor (3) mit im Wesentlichen horizontaler Drehachse (6), wobei der Heckrotor (3) an dem Ende eines Heckauslegers (4) des Drehflügelflugzeugs (1) über ein Gehäuse (10) montiert ist, das Mittel zur Übertragung mechanischer Leistung zwischen einer Nabe (7) des Heckrotors (3) und einer Motorwelle (11), die quer zu der Antriebsachse (6) des Heckrotors (3) ausgerichtet ist, beherbergt,
-) wobei die Antriebswelle (6) des Heckrotors (3) in einer konstanten Ausrichtung im Wesentlichen horizontal und senkrecht zu der Ausrichtung einer vertikalen Ebene (PV), die sich entlang der Längserstreckung (DL) des Drehflügelflugzeugs (1) erstreckt, angeordnet ist, derart, dass die Rotorscheibe (5), die durch die sich drehenden Rotorblätter des Heckrotors (3) gebildet wird, im Wesentlichen in einer längsvertikalen Ausrichtung angeordnet ist und im Wesentlichen eine transversale Schubvektorkomponente (CL1) erzeugt, die das Gierverhalten des Drehflügelflugzeugs (1) steuert,
-) wobei die Nabe (7) die Drehflügel trägt, bestehend aus einer Mehrzahl von Rotorblättern (8), die einzeln zumindest schwenkbeweglich um eine Achse zur Änderung des Anstellwinkels einzeln montiert sind, wobei der Heckrotor (3) mit einem Mechanismus (14) zum Verschwenken der Rotorblätter (8) um ihre Achse der Änderung des Anstellwinkels gemäß Steuersignalen zur Änderung des Anstellwinkels (30, 31), die von einem Knoten (29) des Drehflügelflugzeugs (1) erzeugt werden, ausgerüstet ist,
-) wobei der Betätigungsmechanismus (14) eine Steuerscheibe (27) aufweist, die in drehendem Eingriff mit der Nabe (7) steht, wobei die Steuerscheibe (27) mit Betätigungsstangen (16) der Rotorblätter (8) ausgerüstet ist, die in jeweiligem Eingriff mit Anstellwinkelhebeln (15) sind, mit denen die Rotorblätter (8) einzeln ausgerüstet sind, wobei die Steuerscheibe (27) drehbar auf einer Steuerstange (21) angeordnet ist, die koaxial und translationsbeweglich entlang der Antriebswelle (6) des Heckrotors (3) montiert ist, wobei die Stange durch ein erstes Betätigungselement (17) translationsmanövrierbar ist, dessen Einsatz durch Steuermittel (20) gemäß den Steuerbefehlen zur Änderung des Anstellwinkels (30, 31) einstellbar ist,
-) wobei der Einsatz des ersten Betätigungselements (17) durch die Steuermittel (20) eine kollektive Änderung des Anstellwinkels der Rotorblätter (8) des Heckrotors (3) bewirkt, wodurch die Amplitude des Schubs, der von dem Heckrotor erzeugt wird, geändert wird, wobei der Manövriermechanismus (14) ferner Mittel zur Erzeugung einer zyklischen Änderung des Anstellwinkels der Rotorblätter (8) des Heckrotors (3) aufweist,
**dadurch gekennzeichnet, dass**
-) die Steuerscheibe (27) auf der Steuerstange (21) montiert ist zum Erzeugen einer permanenten periodischen Änderung des Anstellwinkels der Rotorblätter (8) des Heckrotors (3), wobei die Hauptebene der Steuerscheibe (27) in einer Montageebene (PM) mit konstanter Ausrichtung bezüglich einer Antriebswelle (6) des Heckrotors (3) angeordnet ist, und
-) die Steuerstange (21) koaxial um die Antriebswelle (6) des Heckrotors (3) durch ein zweites Betätigungselement (18) verschwenkbar ist, dessen Einsatz in Abhängigkeit von Steuermitteln (20) erfolgt, derart, dass eine Verschwenkung der Steuerstange (21) durch das zweite Betätigungselement (18) zwischen zwei vorbestimmten Extrempositionen eine Änderung der Winkelausrichtung der Steuerscheibe (27) in der Montageebene (PM) bewirkt und anschließend die Ausrichtung der Rotorscheibe (5) ändert, derart, dass:
-) eine Verschwenkung der Steuerstange (21) durch das zweite Betätigungselement (18) in eine erste Extremlage eine Bewegung der Steuerscheibe (27) in der Montageebene (PM) in eine erste extreme Winkelausrichtung bewirkt, in der die permanente periodische Änderung des Anstellwinkels der Rotorblätter (8) des Heckrotors (3) hauptsächlich eine vertikale Schubvektorkomponente (CV) erzeugt,
-) wobei eine Verschwenkung der Steuerstange (21) durch das zweite Betätigungselement in eine zweite Extremlage eine Bewegung der Steuerscheibe (27) in der Montageebene (PM) in eine zweite extreme Winkelausrichtung bewirkt, in der die permanente periodische Änderung des Anstellwinkels der Rotorblätter (8) des Heckrotors (3) im Wesentlichen eine longitudinale Schubvektorkomponente (CL2) erzeugt.

2. Drehflügelflugzeug nach Anspruch 1,
**dadurch gekennzeichnet, dass** die Steuerscheibe (27) koaxial auf der Steuerstange (21) montiert ist, indem sie in einer Montageebene (PM) angeordnet ist, die senkrecht zu der vertikalen Quererstreckungsebene des Drehflügelflugzeugs ausgerichtet und gegenüber der Antriebswelle (6) des Heckrotors (3) geneigt ist, wobei die Steuerscheibe (27) manövrierbar ist zwischen den extremen Winkelausrichtungen durch koaxiales Verschwenken um die Antriebswelle (6) des Heckrotors (3).

3. Drehflügelflugzeug nach Anspruch 2,
**dadurch gekennzeichnet, dass** der Neigungswinkel der Steuerscheibe (27) relativ zu der Antriebswelle (6) des Heckrotors (3) zwischen 10° und 30° liegt.

4. Drehflügelflugzeug nach einem der Ansprüche 2 und 3,
**dadurch gekennzeichnet, dass** die Steuerscheibe (27) unter Zwischenschaltung mindestens eines Rolllagers (19) auf einem Kragenring (22) der Steuerstange (21) montiert ist, der gegenüber der Montageebene (PM) der Steuerscheibe (27) geneigt ist.

5. Drehflügelflugzeug nach Anspruch 1,
**dadurch gekennzeichnet, dass** die Steuerscheibe (27) auf der Steuerstange (21) montiert ist, indem sie in einer zur Antriebswelle (6) des Heckrotors (9) senkrechten Montageebene (PM) angeordnet ist, wobei die Drehachse (A) der Steuerscheibe (27) parallel bezüglich der Antriebswelle (6) des Heckrotors (3) versetzt ist, wobei die Steuerscheibe (27) zwischen den extremen Winkelausrichtungen durch eine Winkelverschiebung der Steuerscheibe (27) in der Montageebene (PM) um die Antriebswelle (6) des Heckrotors (3) manövrierbar ist.

6. Drehflügelflugzeug nach Anspruch 5,
**dadurch gekennzeichnet, dass** die Steuerscheibe (27) unter Zwischenschaltung mindestens eines Rolllagers (19) auf einem zylinderförmigen Bolzen (24) montiert ist, der in radialem Abstand von der Antriebswelle (6) des Heckrotors (3) durch einen Flügel (25) getragen wird, der sich von der Steuerstange (21) radial weg erstreckt.

7. Drehflügelflugzeug nach einem der Ansprüche 1 bis 6,
**dadurch gekennzeichnet, dass** die Steuerstange (21) durch das zweite Betätigungselement (28) zwischen den Endstellungen in einem Schwenkwinkelbereich manövrierbar ist, der sich zwischen 0 und 90° erstreckt.

8. Drehflügelflugzeug nach einem der Ansprüche 1 bis 7,
**dadurch gekennzeichnet, dass** die Steuerscheibe (27) mit der Nabe (7) über eine Gelenkstruktur (28) in drehbarem Eingriff steht.

9. Verfahren zum Einsatz eines Drehflügelflugzeugs (1) nach einem der Ansprüche 1 bis 8,
**dadurch gekennzeichnet, dass**:
eine Steuerung des Gierverhaltens (1) folgende Schritte aufweist:
-) Aussenden eines Steuerbefehls zur Änderung des Anstellwinkels (30) von Rotorblättern (8) durch den Piloten (29) des Drehflügelflugzeugs (1), was zu einer Steuerung des Gierverhaltens des Drehflügelflugzeugs (1) führt,
-) Übertragen des Steuersignals zur kollektiven Änderung des Anstellwinkels (30) von Rotorblättern (8) an Steuermittel (20),
-) Aktivierung der Steuermittel (20) des ersten Betätigungselements (17) gemäß dem Steuersignal zur kollektiven Änderung des Anstellwinkels (30) von Rotorblättern (8), wodurch eine Translationsbewegung der Steuerstange (21) bewirkt wird, dass das geregelte Erzeugen von Auftrieb des Drehflügelflugzeugs (1) durch den Heckrotor (3) folgende Schritte aufweist:
-) Aussenden eines ersten Flugbefehls (31) bezüglich einer Anforderung von Auftrieb des Drehflügelflugzeugs durch den Heckrotor (3) durch den Piloten (29) des Drehflügelflugzeugs (1),
-) Übertragung des ersten Flugbefehls (31) an die Steuermittel (20),
-) Aktivierung der Steuermittel (20) des zweiten Betätigungselements (18) gemäß dem ersten Flugbefehl (31), was eine Schwenkbewegung der Steuerstange (21) in die erste extreme Lage bewirkt, und
dass ein geregeltes Beschaffen eines Translationsvorschubs des Drehflügelflugzeugs (1) durch den Heckrotor (3) folgende Schritte aufweist:
-) Aussenden eines zweiten Flugbefehls (32) bezüglich einer Anforderung eines Vortriebschubs des Drehflügelflugzeugs (1) in Translationsrichtung durch den Heckrotor (3) durch den Piloten des Drehflügelflugzeugs,
-) Übertragung des zweiten Flugbefehls (32) an die Steuermittel (20),
-) Aktivierung des zweiten Betätigungselements (18) durch die Steuermittel (20), was zu einer Schwenkbewegung der Steuerstange (21) in die zweite Extremlage führt.

10. Verfahren nach Anspruch 9,
**dadurch gekennzeichnet, dass** der erste Flugbefehl (31) von einem Piloten des Drehflügelflugzeugs (1) gemäß mindestens folgenden Informationen erzeugt wird, die von den Bordinstrumenten des Drehflügelflugzeugs (1) geliefert werden:
-) der Vortriebsgeschwindigkeit des Drehflügelflugzeugs im Schwebeflug und/oder bei niedrigen Geschwindigkeiten,
-) dem Gesamtgewicht des Drehflügelflugzeugs (1) einschließlich mindestens seinem Leergewicht und dem Zuladungsgeuricht,
-) den Bedingungen der hinteren Zentrierung des Gesamtgewichts des Drehflügelflugzeugs (1).

11. Verfahren nach einem der Ansprüche 9 und 10,
**dadurch gekennzeichnet, dass** der zweite Flugbefehl (32) von einem Piloten des Drehflügelflugzeugs (1) gemäß einer Information erzeugt wird, die von den Bordinstrumenten des Drehflügelflugzeugs (1) bezüglich eines Vortriebs des Drehflügelflugzeugs (1) mit hohen Geschwindigkeiten geliefert wird.

## Claims

1. Rotorcraft (1) fitted with at least one main rotor (2) with a drive axis in substantially vertical rotation and an anti-torque tail rotor (3) with a drive axis (6) in substantially horizontal rotation, said tail rotor (3) being mounted at the end of a tail boom (4) of the rotorcraft (1) via a frame (10) housing the means for transmitting mechanical power between a hub (7) of the tail rotor (3) and a drive shaft (11) oriented transversely to said drive axis (6) of the tail rotor (3),
-) the drive axis (6) of the tail rotor (3) being positioned in a constant, substantially horizontal orientation and orthogonal to the orientation of the vertical plane (PV) extending in the longitudinally extending orientation (DL) of the rotorcraft (1) such that the rotor disc (5) formed by the rotary wing of the tail rotor (3) is positioned mainly in a longitudinal-vertical orientation while essentially generating a transverse thrust vector component (CL1) controlling the yaw behaviour of the rotorcraft (1),
-) said hub (7) bearing said rotary wing composed of a plurality of blades (8) mounted so as to be individually movable on the hub (7) at least in pivoting about a pitch variation axis, the tail rotor (3) being fitted with a manoeuvring mechanism (14) for pivoting the blades (8) about their said pitch variation axis according to pitch variation commands (30, 31) generated by a pilot (29) of the rotorcraft (1),
-) said manoeuvring mechanism (14) comprising a control plate (27) engaged in rotation with the hub (7), the control plate (27) being provided with connecting links (16) for manoeuvring the blades (8) engaged respectively with pitch levers (15) fitted individually to the blades (8), the control plate (27) being mounted so as to rotate on a control rod (21) mounted so as to be coaxial and movable in translation along the drive axis (6) of the tail rotor (3) while being manoeuvrable in translation by a first actuator (17), the operation of which can be regulated by control means (20) according to said pitch variation commands (30, 31),
-) the operation of the first actuator (17) by the control means (20) thereby causing a collective variation of the pitch of the blades (8) of the tail rotor (3) modifying the amplitude of the thrust generated by the tail rotor, the manoeuvring mechanism (14) further comprising means for generating a cyclic variation in the pitch of the blades (8) of the tail rotor (3), characterised:
-) in that the control plate (27) is mounted on the control rod (21) so as to generate a permanent cyclic variation of the pitch of the blades (8) of the tail rotor (3), the general plane of the control plate (27) being positioned in a mounting plane (PM) with a constant orientation relative to the drive axis (6) of the tail rotor (3), and
-) in that the control rod (21) can be manoeuvred in coaxial pivoting about the drive axis (6) of the tail rotor (3) by a second actuator (18), the operation of which is made dependent upon the control means (20), such that a pivoting manoeuvre of the control rod (21) by the second actuator (18) between two predefined extreme positions causes a change in angular orientation of the control plate (27) in said mounting plane (PM) and consequently modifies the orientation of said rotor disc (5), such that:
-) a manoeuvre by the second actuator (18) to pivot the control rod (21) towards a first extreme position causes the control plate (27) to be manoeuvred in the mounting plane (PM) towards a first extreme angular orientation wherein the permanent cyclic variation in the pitch of the blades (8) of the tail rotor (3) principally generates a vertical thrust vector component (CV),
-) a manoeuvre by the second actuator (18) to pivot the control rod (21) towards a second extreme position causes the control plate (27) to be manoeuvred in the mounting plane (PM) towards a second extreme angular orientation wherein the permanent cyclic variation in the pitch of the blades (8) of the tail rotor (3) principally generates a longitudinal thrust vector component (CL2).

2. Rotorcraft according to claim 1,
**characterised in that** the control plate (27) is mounted coaxially on the control rod (21) while being positioned in a mounting plane (PM) oriented orthogonally to the transversely extending vertical plane of the rotorcraft and tilted relative to the drive axis (6) of the tail rotor (3), the control plate (27) being manoeuvrable between said extreme angular orientations by coaxial pivoting about the drive axis (6) of the tail rotor (3).

3. Rotorcraft according to claim 2,
**characterised in that** the angle of inclination of the control plate (27) relative to the drive axis (6) of the tail rotor (3) is in the range 10° to 30°.

4. Rotorcraft according to any one of claims 2 to 3,
**characterised in that** the control plate (27) is mounted via at least one bearing member (19) on a flange (22) of the control rod (21) tilted in the mounting plane (PM) of the control plate (27).

5. Rotorcraft according to claim 1,
**characterised in that** the control plate (27) is mounted on the control rod (21) while being positioned in a mounting plane (PM) orthogonal to the drive axis (6) of the tail rotor (3), the axis of rotation (A) of the control plate (27) being off-centred parallel to the drive axis (6) of the tail rotor (3), the control plate (27) being manoeuvrable between said extreme angular orientations by angular displacement of the control plate (27) in said mounting plane (PM) about the drive axis (6) of the tail rotor (3).

6. Rotorcraft according to claim 5,
**characterised in that** the control plate (27) is mounted via at least one bearing member (19) on a cylindrical finger (24) borne at a radial distance from the drive axis (6) of the tail rotor (3) by a wing (25) extended radially from the control rod (21).

7. Rotorcraft according to any one of claims 1 to 6,
**characterised in that** the control rod (21) can be manoeuvred by the second actuator (18) between said extreme positions over an angular range of pivoting extending from 0° to 90°.

8. Rotorcraft according to any one of claims 1 to 7,
**characterised in that** the control plate (27) is engaged in rotation with the hub (7) via an articulated structure (28).

9. Method for implementing a rotorcraft (1) according to any one of claims 1 to 8,
**characterised:**
**in that** an operation to control the yaw attitude of the rotorcraft (1) comprises the following steps:
-) sending by the pilot (29) of the rotorcraft (1) of a control to vary the collective pitch (30) of the blades (8) thereby controlling the yaw attitude of the rotorcraft (1),
-) transmission of said command (30) to vary the collective pitch of the blades (8) to the control means (20),
-) activation by the control means (20) for the first actuator (17) according to said command (30) to vary the collective pitch of the blades (8), thereby displacing the control rod (21) in translation,
**in that** an operation to produce regulated lift of the rotorcraft (1) by the tail rotor (3) comprises the following steps:
-) sending by the pilot (29) of the rotorcraft (1) of a first flight command (31) relating to a request to produce lift of the rotorcraft (1) by the tail rotor (3),
-) transmission of the first flight command (31) to the control means (20),
-) activation by the control means (20) of the second actuator (18) according to said first flight command (31), causing a manoeuvre to pivot the control rod (21) towards said first extreme position, and
**in that** an operation to produce regulated propulsion in translation of the rotorcraft (1) by the tail rotor (3) comprises the following steps:
-) sending by the pilot of the rotorcraft of a second flight command (32) relating to a request for propulsive thrust of the rotorcraft (1) in translation by the tail rotor (3),
-) transmission of the second flight command (32) to the control means (20),
-) activation by the control means (20) of the second actuator (18) causing a manoeuvre to pivot the main rod (21) towards said second extreme position.

10. Method according to claim 9,
**characterised in that** the first flight control (31) is generated by a pilot of the rotorcraft (1) according to at least one of the following pieces of information provided by the on-board instrumentation of the rotorcraft (1):
-) forward speed of the rotorcraft (1) in stationary flight and/or at low speeds,
-) the overall mass of the rotorcraft (1) including at least the mass of its structure and the mass of payloads,
-) the rear centring conditions of said overall mass of the rotorcraft (1).

11. Method according to any one of claims 9 and 10,
**characterised in that** the second flight control (32) is generated by a pilot of the rotorcraft (1) according to information provided by the on-board instrumentation of the rotorcraft (1) in relation to forward movement of the rotorcraft (1) at high speeds.
